# EUROPEAN PATENT SPECIFICATION

(11) **EP 1 266 567 B1**
(45) Date of publication and mention of the grant of the patent: **30.03.2005**
(21) Application number: 02254134.6
(22) Date of filing: 13.06.2002
(51) Int. Cl.: A01K 61/00

(54) **Oyster bag end cap**
Verschluss für Austernsack
Obturateur pour sac à huitres

(30) Priority: 13.06.2001 AU PR563201
(43) Date of publication of application: 18.12.2002
(73) Proprietor: B.S.T. OYSTERS SUPPLIES PTY LTD, Cowell, 5602 SA (AU)
(72) Inventor: B.S.T. OYSTERS SUPPLIES PTY LTD, Cowell, 5602 SA (AU)
(74) Representative: Jones, Graham H.

(56) References cited:
- FR-A- 2 345 914
- FR-A- 2 482 418
- US-A- 4 704 990

## Description

This invention relates to oyster containment bags used in farming oysters.

### BACKGROUND

Oyster farming is a relatively new aquaculture activity that is proving to be more successful than reliance on oyster collection from the open sea.

Since this activity is relatively new, the methodologies for creating the best environment for the oysters during their growth phase are still being explored, but suffice to say, there are already a core of standard practices for both Subtidal and Intertidal conditions.

In a Subtidal arrangement oyster filled bags are suspended from a long line kept afloat by buoys. The bags are kept continuously under the surface of relatively shallow water where it is possible for the oysters to continually feed and thus promote rapid growth.

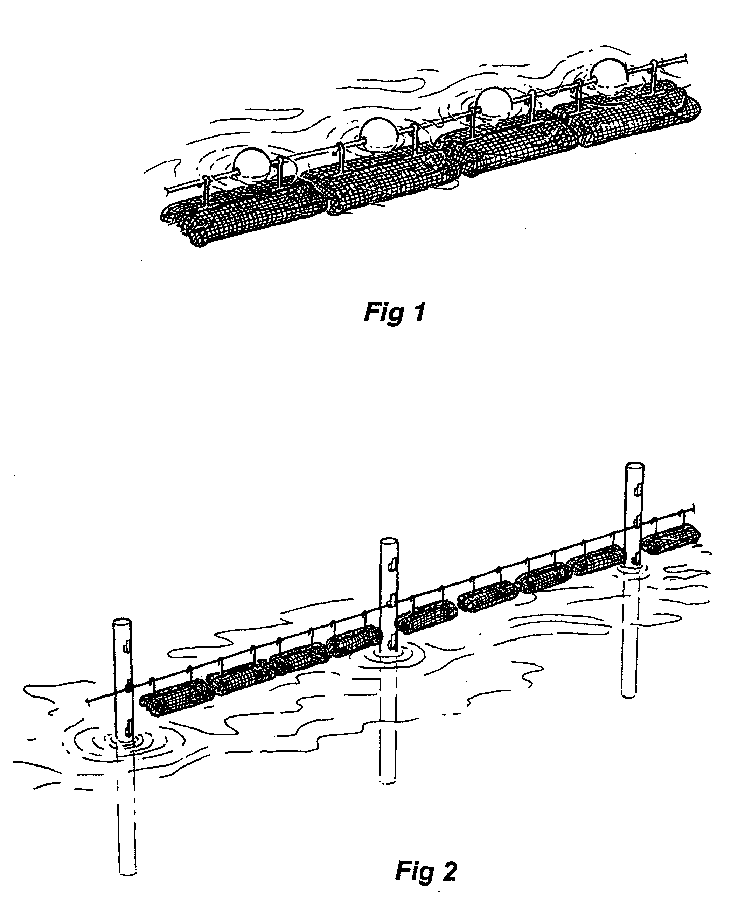

Subtidal long lines are floated using approximately 22 buoys (some small at 35cm by 30cm and some large at 110cm by 20cm) and the long line is capable of suspending approximately 120 bags at a time. Fig 1 is a pictorial representation of a Subtidal long line.

Intertidal arrangements are designed to best use the rise and fall of the tide over a collection of oyster filled bags that are suspended just above the sea floor.

The construction of the oyster bag for both Subtidal and Intertidal arrangements typically comprises a mesh enclosure that allows nutrients to freely flow through it. The mesh enclosure is typically generally cylindrically shaped plastic mesh (bag) suspended by at least two hooks from a long wire. The plastic used, for both the mesh and the hooks used to suspend the bag, is typically UV stabilized polypropylene.

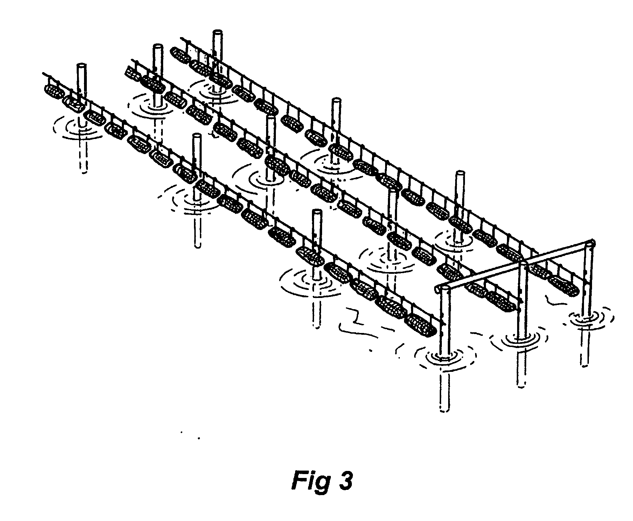

A single Intertidal long line typically comprises 34 timber 2.7m long posts having 3.5m spacings arranged in a straight line approximately 110m long. The line used to suspend the oyster bags from is typically Bayco wire and on each post there are up to 3 adjustments clips, also known as riser clips, located some 15cm apart so that the long line can be adjusted vertically along the posts. Each long line may hold approximately 96 to 99 bags (3 bags between each post). The Intertidal system described is also referred to as a long line system an example of which is pictorially represented in Fig 2. The long wire may be moved up and down the posts so as to allow the bags to be hung at an appropriate height to cater for variable tide heights. Fig. 3 depicts an array of Intertidal long lines.

Bags are typically made from plastic square mesh material, the mesh having various aperture sizes (3, 6, 12 and 20mm). The bag is made from a 900mm wide strip of plastic mesh material that is cut to 70cm in length. This rectangle of plastic mesh material is then rolled into a substantially cylindrical shape to create a 60cm circumference bag and a 10cm overlap. The cylinder becomes flattened when the ends are made to create a bag with an ovoid (oval) shaped cross-section.

Current practice is to seal off the ends of the bag so as to ensure the contents do not fall out, using about 15cm of the mesh at both of the ends. The mesh is folded to create flaps that dose off the otherwise open ends of the oval shaped mesh bag. These flaps can also be opened when required to inspect the contents and for final removal of the fully developed oysters.

To keep the ends of the bag closed and to provide a convenient hanging element, a single stiff piece of wire is used to fix the flaps into place. To attach the wire to the bag one end of the wire is firstly hooked into a substantially flat side of the mesh bag and then threaded over and through the outer flap then threaded through the area of the crease created by the flap so as to secure the flap in a dosed position.

Along the side of the bag near the crease, a suspension hook is threaded onto the wire. At the bottom of the suspension hook there is a hollow rod-like shape through which the wire is threaded. The shaft and the rod of the hook are at right angles to each other.

The wire is then woven in and out along the centre of one side of the length of the bag until it nears the far end of the bag at which point a further suspension hook is threaded onto the wire. When the bag is suspended from the long line, the bag swings as the hook pivots on the long line as well as the wire on the bag. The two hooks are thus positioned so as to balance the suspension of the oyster bag from the long line wire running between posts or buoys as the case may be for Intertidal of Subtidal suspension arrangements respectively.

In the manner described previously, the other bag end is closed over by creating a further two flaps and binding them into position with the free end of the wire in the manner described previously. The free end of the wire is eventually hooked into the mesh on the side opposite the suspension hooks so as to complete the creation of an oyster bag with hooks.

Final oyster bag shape has outer dimensions of approximately 60cm length, 16cm height and 27cm width with an ovoid cross-sectional shape at along its length.

Typically, some 100 oysters are placed into each bag and during their growth, those oysters need to be physically inspected at least monthly if not daily in some circumstances if large mesh sizes are used.

Regardless of the reason for access to the interior of the oyster bag, the action of opening at least one end of the dosed off bag requires the wire to be unhooked, unwoven from the flaps and the mesh uncurled to form an opening to the bag.

This is often undertaken in a boat located adjacent to the long line in Subtidal arrangements and while standing beside the long line in Intertidal arrangements.

Each time the flaps are uncurled the crease line of the flaps is stressed and each time the flaps are dosed, the crease line area of the mesh is further stressed.

Eventually, links in the mesh along the crease line fail and the strength of the closure to the bag is weakened to the extent that the closure is no longer effective.

The crease will eventually be an area at which the bag ruptures and the contents of the bag may be lost to the sea.

Stresses on the crease lines are exacerbated by the sideways forces of the push and pull caused by the rod like formation at the bottom of the suspension hook as wind and sea buffet the bag.

The bag is typically disposed of once the crease line is breached, as the possible future loss of oysters is too high a cost relative to the cost of replacing the bag. Thousands of such bags are infact a disposal problem of increasing proportions.

Sometimes operators shorten the bag by cutting off the mesh flaps at the damaged crease and creating new flaps having a new crease line. However, not only does that shorten the bag meaning that there are less oyster that can be contained therein, but the action of creating a further crease does not last for long as the mesh is by then weathered and more brittle. This approach thus increases the chance of rupture and loss of the bag contents.

FR-A-2482418 discloses an oyster bag and caps that clamp on the open ends of the mesh oyster bag. Access to the bag requires the whole end cap to be removed completely.

It is an object of the invention to provide an alternative to reuse of the bag mesh by creating new closure flaps or the typical outright disposal of the damaged bag mesh.

### BRIEF DESCRIPTION OF THE INVENTION

In a broad aspect of the invention, an end cap arrangement for an open mesh oyster bag enclosure comprising, an aperture frame adapted for abutment and fixture to said open mesh oyster bag enclosure to create an aperture to said bag; and
an end cap means adapted for pivotal movement with respect to said aperture frame so as to open and close said aperture and thus respectively open and close access to said oyster bag.

In another broad aspect of the invention, an oyster bag made of open mesh material for enclosing a plurality of oysters when in use, said bag having two ends and said bag further comprising at least one end cap arrangement having an aperture frame adapted for abutment and fixture to said open mesh oyster bag enclosure to create an aperture to said bag; and an end cap means adapted for pivotal movement with respect to said aperture frame so as to open and close said aperture and thus respectively open and close access to said oyster bag.

In a further aspect of the invention, the closure means is adapted to allow the flow through of water carrying nutrients for oysters located within the bag.

In yet a further aspect of the invention, the aperture frame is adapted for pivotal attachment of a suspension means so as to allow the oyster bag to be suspended from a line by the suspension means.

Specific embodiments of the invention will now be described in some further detail with reference to and as illustrated in the accompanying figures. These embodiments are illustrative, and are not meant to be restrictive of the scope of the invention. Suggestions and descriptions of other embodiments may be included within the scope of the invention, but they may not be illustrated in the accompanying figures or alternatively features of the invention may be shown in the figures but not described in the specification.

### BRIEF DESCRIPTION OF THE FIGURES

Fig 1 depicts a Subtidal long line oyster bag suspension line arrangement;
Fig 2 depicts an Intertidal long line oyster bag suspension line arrangement;
Fig 3 depicts an array of Intertidal long lines;
Fig 4 depicts a rear perspective view of an embodiment of an oyster bag end cap arrangement;
Fig 5 depicts a open end cap arrangement for an oyster bag;
Fig 6 depicts a closed end view of the oyster bag of Fig 5; and
Fig 7 depicts a suspension hook pivotal arrangement embodiment.

### DETAILED DESCRIPTION OF EMBODIMENTS OF THE INVENTION

The invention may be implemented in a number of ways the embodiment described herein is but one of those ways. Indeed, features of the embodiment are not necessarily ideal and a combination of features described but not illustrated may be more suited to a particular task at hand.

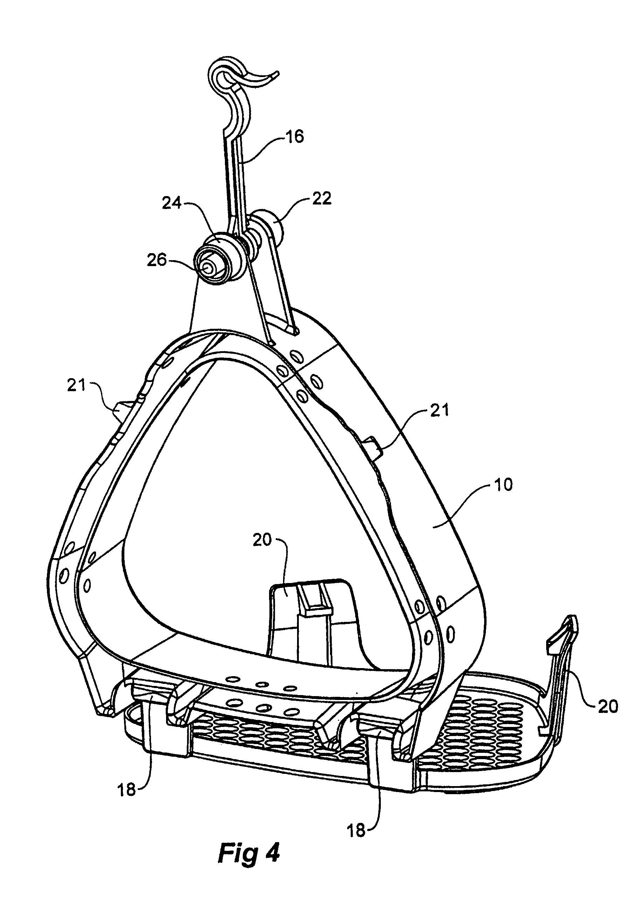

Fig 4 depicts an embodiment of an end cap arrangement having an aperture frame 10 for fitment to one end of a mesh oyster bag and an endcap means 12 pivotably attached to the frame.

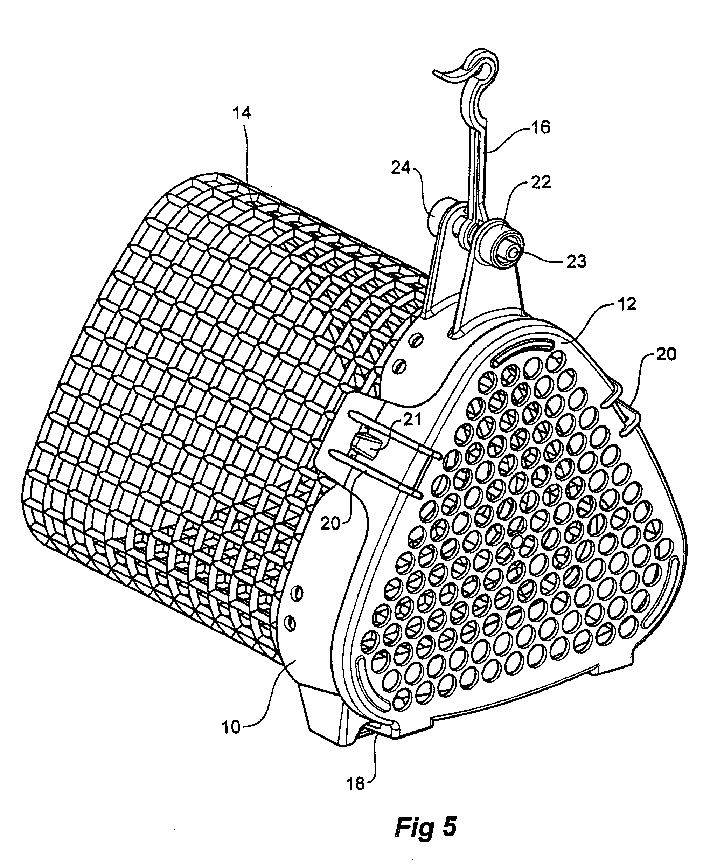

The aperture frame has a groove 13 running about the periphery of the structure suitable for the insertion of the free end of a plastic mesh that forms the walls of the oyster bag 14 (shown in fig 5). The generally triangular cross-sectional shaped oyster bag (as opposed to the typically generally ovoid cross-sectionally shaped prior art bags) is in part shaped by the form of the slot. It has been found particularly advantagous that the shape of the bag is triangular as the flat bottom encourages good spacing of the oysters. Secondly, the shape has been found to be strong and self-supporting and yet further the rounded comers do not allow the growing oysters to wedge themselves into folds and creases of the mesh as was the case in prior oyster bags.

The aperture frame can be of a variety of shapes but preferably the nominally lower most wall should be left and of sufficient area to allow up to 100 fully grown oysters to lie non-overlapping thereon. Clearly, that it is not always the case but oysters can be overcrowded and the width and length dimension of the lower wall can be important.

There is ideally at least one lateral grid of the mesh positioned fully within the groove 13 such that it extends past the apertures 15 that are designated in Fig 4. Wire or other fixing means (e.g. cable tie) are to used to secure the mesh to the aperture frame. This is done once when the oyster bag is initially constructed and not disturbed until the mesh becomes brittle and risky to securely maintain the oysters within the bag under rough sea going conditions. However, depending on the condition of the end cap arrangement it can be reused by attachment to a fresh plastic mesh enclosure.

Fig 5 depicts the same embodiment that consists of an aperture frame 10 and a closure means (end cap) 12 both depicted in close proximity to a plastic mesh 14 and a suspension hook 16.

The frame 10 is shown in perspective from its front thus not shown is the groove 13 on its rearward side adapted to accommodate the peripheral edge of the mesh 14. A generally triangular shaped tube is preferred in this example since it is anticipated that it will be a strong shape in the long term. The shape also has a gentle curvature at its three apex regions as described previously that provides a smooth substantially flat area large enough for the optimum distribution of approximately 100 oysters within the finished oyster bag enclosure.

The embodiment shown in Figs 4 and 5 also depict an end cap 12 that is pivotally attached to the frame 10.

The pivoting arrangement 18 (not dearly depicted) is but one of many that could be used as is also the latching mechanism 20 one of many that could be used.

The criteria used to select either of these mechanisms is tempered by a number of factors, one of which is that they be made so as to be less likely to foul. Various crustaceans are known to attach themselves to the bag and its parts. The growth of these various crustaceans should be anticipated to occur in the most awkward of locations and their effect on the pivotal and latching actions of the end cap kept in mind.

In this respect in Fig. 5, the latching mechanism 20 appears to be a preferable arrangement as is the pivoting arrangement 18

The end cap 12 is latched closed by the action of two tangs 20, which project from the end cap. These tangs are shaped and located so as to be, in their unbiased location, inside the projected boundary of the end cap. Such a position is required such that when the end cap is moved into the frame 10, the tangs are pushed slightly apart and over the outer surface of the frame 10. Retention tab 21 partially presents an abutment surface to clamp against the inside edge of the frame and this retain the end cap closed until the related tang is lifted against its bias and the abutment surface becomes clear of the inside edge of the frame and tab 21 so as to allow the end cap to pivot to an open position.

Such a tang arrangement alone could possibly restrain the end cap from opening but this is unlikely to be long lasting because the contents of the bag as well as the wind and sea will buffet the end cap sufficiently so as to force it to unlatch. There are many ways in which to secure the tangs, one such example is described. The catch mechanism of this arrangement is thought to be sufficient for use in the anticipated environment.

The size of the apperatus provided in the end cap 12 can be made to suit the mesh with which it is used. Such that for a 6mm mesh, 6mm apertures are used and like wise for 12mm mesh use.

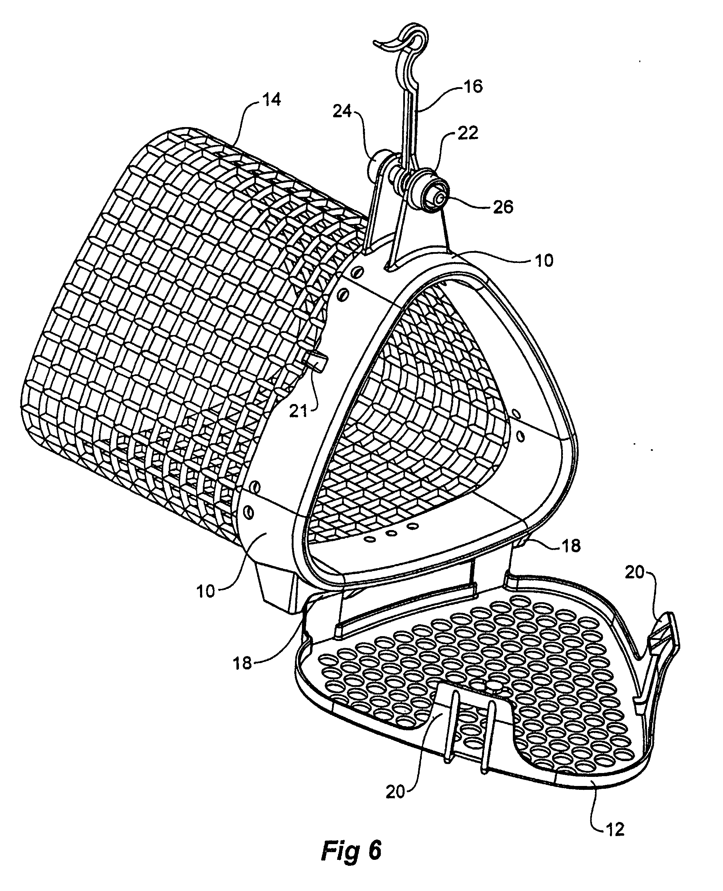

Fig 6 depicts like numbers to the same element depicted in Fig 5. Thus the embodiment in Fig 6 includes a frame 10 and end cap 12, pivot arrangement 18 and a latching mechanism 20 attachable to a mesh tube 14.

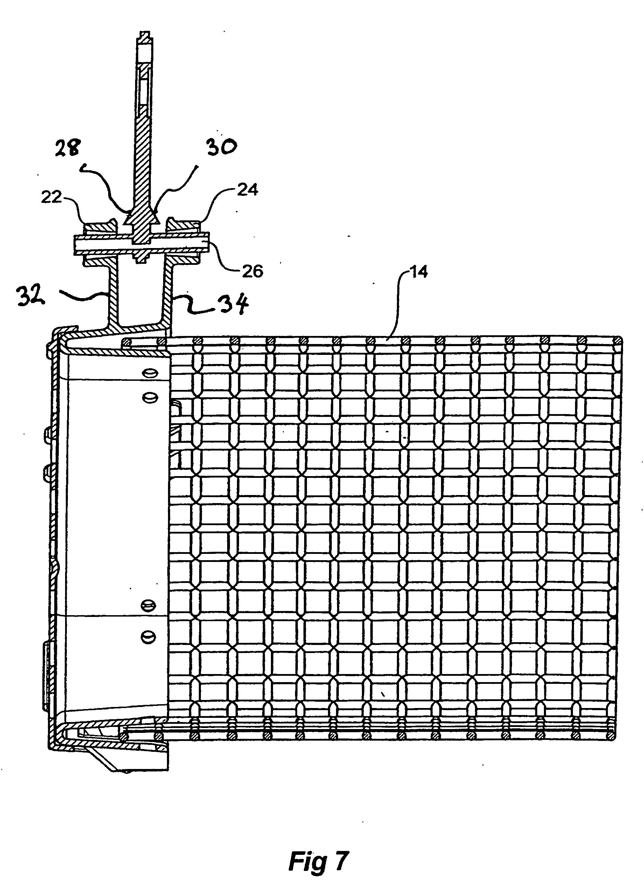

The oyster bag needs to be, as was described previously, suspended in an oyster growing environment and if the use of suspension hooks 16 are to be used as they have been in the past, then there is preferably a provision on the frame 10 for an attachment mechanism adapted for enclosing the rod like end 26 of the suspension hook. In particular, the attachment should allow respective pivotal movement of the bag and the suspension hook. One example of an attachment means is the opposed semi-circular tabs 22 and 24 which are spaced apart so that the rod like end 26 of the hook can be inserted into circular apertures in respective tabs as shown in Fig 7.

The suspension hooks 16 may also have on their shaft, one or more barbs 28 and 30. These barbs are located and sized so as to restrain upward movement of the attachment means of the frame once the suspension hook is fitted to the frame but this is merely an added feature.

The suspension hook adaption depicted in Fig. 7 is formed from two apertures located on opposing walls 32 and 34 that are at the top of the frame 10. When the walls are separated slightly from their unbiased positions, the rod like end 26 of the bottom of the suspension hook 16 can be inserted through respective apertures to provide a pivotal connection between the hook and the frame. This arrangement allows pivoting between the hook and the frame and hence allows swinging motion of the oyster bag in the open sea or even sheltered intertidal conditions.

It is to be noted that one of the environmental factors requiring consideration when designing any of the pivotal elements of the bags is that sand and floating debris can become detrimental wear agents between moving parts. Therefore, it is useful to expect such wear and design plastic thicknesses accordingly or devise a means to exclude those agents from the moving parts.

## Claims

1. An end cap arrangement for an open mesh oyster bag (14) enclosure comprising,
an aperture frame (10) adapted for abutment and fixture to said open mesh oyster bag (14) enclosure to create an aperture to said bag; and
an end cap (12) means adapted for pivotal (18) movement with respect to said aperture frame so as to open and close said aperture and thus respectively open and close access to said oyster bag.

2. An end cap arrangement according to claim 1 wherein said end cap means (12) is adapted to allow the flow through of water carrying nutrients for oysters located within said bag.

3. An end cap arrangement according to claim 1 wherein said end cap means (12) is shaped and adapted to require the open mesh oyster bag enclosure to have a substantially triangular lateral cross-sectional shape.

4. An end cap arrangement according to claim 1 wherein said aperture frame (10) is adapted for pivotal attachment of a suspension means (16) so as to allow said oyster bag to be suspended from a line by said suspension means.

5. An end cap arrangement according to claim 4 wherein said suspension means has a hook (16) at one end for pivoting engagement with said line.

6. An end cap arrangement according to claim 4 wherein said suspension means (16) has when in use a pair of horizontally disposed posts arranged for engagement with vertically disposed circular apertures in a said end cap arrangement such that said end cap can pivot about said posts.

7. An oyster bag (14) made of open mesh material for enclosing a plurality of oysters when in use, said bag having two ends and said bag further comprising
at least one end cap (14) arrangement having
an aperture frame (18) adapted for abutment and fixture to said open mesh oyster bag enclosure to create an aperture to said bag; and
an end cap (12) means adapted for pivotal (18) movement with respect to said aperture frame so as to open and close said aperture and thus respectively open and close access to said oyster bag.

8. An oyster bag according to claim 7 wherein each of said two ends are fitted with a said end cap arrangement (14).

9. An oyster bag according to claim 7 wherein said open mesh oyster bag enclosure has a substantially triangular lateral cross-sectional shape.

10. An oyster bag according to claims 7, 8 and 9 wherein said end cap means (14) is adapted to allow the flow through of water carrying nutrients for oysters located within said bag.

11. An oyster bag according to claim 8 wherein said aperture frame is adapted for pivotal attachment of a suspension means so as to allow said oyster bag to be suspended from a line by said suspension means (16).

12. An oyster bag according to claim 11 wherein said suspension means has a hook (16) at one end for pivoting engagement with said line.

13. An oyster bag according to claim 11 wherein said suspension means (16) has when in use a pair of horizontally disposed posts for engagement with vertically disposed circular apertures in a said end cap arrangement such that said end cap can pivot about said posts.

## Patentansprüche

1. Eine Verschlußanordnung für eine offenmaschige Austemsack (14)-Umhüllung, aufweisend
einen Öffnungsrahmen (10) der für eine Anlage und Befestigung an besagte offenmaschige Austemsack (14)-Umhüllung eingerichtet ist um eine Öffnung zu besagtem Sack zu bilden;
und
Verschlußeinrichtungen (12), die für eine Schwenk (18)-Bewegung in Bezug auf besagten Öffnungsrahmen eingerichtet sind, so daß sie besagte Öffnung öffnen und schließen und somit Zugang zu besagtem Austernsack öffnen bzw. schließen.

2. Eine Verschlußanordnung nach Anspruch 1, worin besagte Verschlußeinrichtungen (12) daran angepaßt sind, den Durchfluß von Wasser, das Nährstoffe für Austern, die innerhalb besagten Sackes angeordnet sind, trägt, zu erlauben.

3. Eine Verschlußanordnung nach Anspruch 1, worin besagte Verschlußeinrichtungen (12) geformt und angepaßt sind um zu erfordern, daß die offenmaschige Austernsackumhüllung eine im Wesentlichen dreieckige seitliche Querschnittsform hat.

4. Eine Verschlußanordnung nach Anspruch 1, worin besagter Öffnungsrahmen (10) zur schwenkbaren Anbringung an einer Aufhängeeinrichtung (16) ausgebildet ist, um zu erlauben, daß besagter Austemsack von einer Schnur durch besagte Aufhängeeinrichtungen abgehängt werden kann.

5. Eine Verschlußeinrichtung nach Anspruch 4, worin besagte Aufhängeeinrichtungen einen Haken (16) an einem Ende zum Schwenkeingriff mit besagter Schnur haben.

6. Eine Verschlußanordnung nach Anspruch 4, worin besagte Aufhängeeinrichtungen (16), wenn sie in Gebrauch sind, ein Paar von waagrecht angeordneten Stangen haben, die zum Eingriff mit senkrecht angeordneten kreisförmigen Öffnungen in besagter Verschlußanordnung angeordnet sind, derart, daß besagter Verschluß um besagte Stangen schwenken kann.

7. Ein Austemsack (14) hergestellt aus offenmaschigem Material zum Einschließen einer Mehrzahl von Austern, wenn er in Gebrauch ist, wobei besagter Sack zwei Enden hat und besagter Sack weiter aufweist
mindestens eine Verschlußanordnung (14) mit
einem Öffnungsrahmen (18), der zur Anlage und Befestigung an besagter offenmaschiger Austernsackumhüllung angepaßt ist, um eine Öffnung zu besagtem Sack zu erzeugen; und
Verschlußeinrichtungen (12), die für Schwenk (18)-Bewegung in Bezug auf besagten Öffnungsrahmen angepaßt sind, um besagte Öffnung zu öffnen und zu schließen und somit den Zugang zu besagtem Austemsack zu öffnen bzw. zu schließen.

8. Ein Austemsack nach Anspruch 7, worin jedes der beiden besagten Enden mit besagter Verschlußanordnung (14) versehen ist.

9. Ein Austernsack nach Anspruch 7, worin besagte offenmaschige Austernsackumhüllung eine im Wesentlichen dreieckige seitliche Querschnittsform hat.

10. Ein Austemsack nach Anspruch 7, 8 und 9, worin besagte Verschlußeinrichtungen (14) daran angepaßt sind, den Durchfluß von Wasser, das Nährstoffe für Austern, die innerhalb besagten Sackes angeordnet sind, trägt, zu erlauben.

11. Ein Austernsack nach Anspruch 8, worin besagter Öffnungsrahmen für Schwenkanbringung von Aufhängeeinrichtungen angepaßt ist, um zu erlauben, daß besagter Austemsack von einer Schnur durch besagte Aufhängeeinrichtungen (16) abgehängt wird.

12. Ein Austemsack nach Anspruch 11, worin besagte Aufhängeeinrichtungen einen Haken (16) an einem Ende zum Schwenkeingriff mit besagter Schnur haben.

13. Ein Austemsack nach Anspruch 11, worin besagte Aufhängeeinrichtungen (16), wenn sie in Gebrauch sind, ein Paar von waagrecht angeordneten Stangen haben, die zum Eingriff mit senkrecht angeordneten kreisförmigen Öffnungen in besagter Verschlußanordnung angeordnet sind, derart, daß besagter Verschluß um besagte Stangen schwenken kann.

## Revendications

1. Agencement de capuchon d'extrémité pour une poche (14) à huîtres à mailles ouvertes, qui comprend :
un châssis d'ouverture (10) adapté pour venir buter contre ladite poche (14) à huîtres à mailles ouvertes et pour s'y fixer pour ménager une ouverture dans ladite poche et
un moyen (12) de capuchon d'extrémité adapté pour se déplacer à pivotement (18) par rapport audit châssis d'ouverture pour ouvrir et fermer ladite ouverture et pour ainsi ouvrir et fermer l'accès à ladite poche à huîtres.

2. Agencement de capuchon d'extrémité selon la revendication 1, dans lequel ledit moyen (12) de capuchon d'extrémité est adapté pour permettre l'écoulement d'eau chargée d'éléments nutritifs destinés aux huîtres situées dans ladite poche.

3. Agencement de capuchon d'extrémité selon la revendication 1, dans lequel ledit moyen (12) de capuchon d'extrémité est façonné et adapté pour que la poche à huîtres à mailles ouvertes présente en coupe transversale une forme essentiellement triangulaire.

4. Agencement de capuchon d'extrémité selon la revendication 1, dans lequel ledit châssis d'ouverture (10) convient pour fixer à pivotement un moyen (16) de suspension qui permet de suspendre ladite poche à huîtres à une ligne à l'aide dudit moyen de suspension.

5. Agencement de capuchon d'extrémité selon la revendication 4, dans lequel ledit moyen de suspension présente à une extrémité un crochet (16) qui engage ladite ligne à pivotement.

6. Agencement de capuchon d'extrémité selon la revendication 4, dans lequel ledit moyen (16) de suspension présente en fonctionnement deux supports qui sont disposés horizontalement et qui sont agencés pour engager des ouvertures circulaires disposées verticalement et ménagées dans ledit agencement de capuchon d'extrémité, de telle sorte que ledit capuchon d'extrémité puisse pivoter autour desdits supports.

7. Poche (14) à huîtres formée d'un matériau à mailles ouvertes pour envelopper en fonctionnement une pluralité d'huîtres, ladite poche présentant deux extrémités et ladite poche comprenant en outre :
au moins un agencement (14) de capuchon d'extrémité qui présente :
un châssis d'ouverture (18) adapté pour venir buter contre ladite poche à huîtres à mailles ouvertes et s'y fixer pour ménager une ouverture dans ladite poche et
un moyen (12) de capuchon d'extrémité adapté pour se déplacer à pivotement (18) par rapport audit châssis d'ouverture pour ouvrir et fermer ladite ouverture et pour ainsi ouvrir et fermer l'accès à ladite poche à huîtres.

8. Poche à huîtres selon la revendication 7, dans laquelle lesdites deux extrémités sont chacune dotées dudit agencement (14) de capuchon d'extrémité.

9. Poche à huîtres selon la revendication 7, dans laquelle ladite poche à huîtres à mailles ouvertes présente en coupe transversale une forme essentiellement triangulaire.

10. Poche à huîtres selon les revendications 7, 8 ou 9, dans laquelle ledit moyen (14) de capuchon d'extrémité est adapté pour permettre l'écoulement d'eau chargée d'éléments nutritifs destinés aux huîtres situées dans ladite poche.

11. Poche à huîtres selon la revendication 8, dans lequel ledit châssis d'ouverture est adapté pour fixer à pivotement un moyen de suspension qui permet de suspendre ladite poche à huîtres sur une ligne à l'aide dudit moyen (16) de suspension.

12. Poche à huîtres selon la revendication 11, dans laquelle ledit moyen de suspension présente à une extrémité un crochet (16) qui engage ladite ligne à pivotement.

13. Poche à huîtres selon la revendication 11, dans laquelle ledit moyen (16) de suspension présente en fonctionnement deux supports disposés horizontalement pour engager les ouvertures circulaires disposées verticalement et ménagées dans ledit agencement de capuchon d'extrémité de telle sorte que ledit capuchon d'extrémité puisse pivoter autour desdits supports.
